# EUROPEAN PATENT APPLICATION

(11) **EP 4 600 339 A1**
(43) Date of publication of application: **13.08.2025**
(21) Application number: 23874828.9
(22) Date of filing: 02.10.2023
(51) Int. Cl.: C12G 3/055, A23L 2/00, A23L 2/02, A23L 2/60

(54) **PRODUCTION METHOD FOR STEVIOL GLYCOSIDE-CONTAINING BEVERAGE, AND BEVERAGE**

(30) Priority: 03.10.2022 JP 2022159732
(71) Applicant: Suntory Holdings Limited, Osaka-shi, Osaka 530-8203 (JP)
(72) Inventor: KUBOTA Risa, Kawasaki-shi, Kanagawa 211-0067 (JP); SEIKI Hiroshi, Kawasaki-shi, Kanagawa 211-0067 (JP); TAMAOKA Kuniyasu, Kawasaki-shi, Kanagawa 211-0067 (JP); KUBOTA Mai, Kawasaki-shi, Kanagawa 211-0067 (JP)
(74) Representative: Grünecker Patent- und Rechtsanwälte PartG mbB
(86) International application number: PCT/JP2023/035948
(87) International publication number: WO 2024/075701

(57) **Abstract**

Provided is a novel steviol glycoside-containing beverage having a favorable taste quality, or a production method therefor. The present invention provides a production method for a beverage, comprising: freezing at least one selected from the group consisting of fruits and vegetables to obtain a frozen product; finely grinding the frozen object to obtain a finely ground product; immersing the finely ground product in an alcohol solution with a concentration, at which at least one raw material component can be extracted, to obtain an alcohol immersion solution; and blending the alcohol immersion solution and a steviol glycoside with a beverage.

## Description

### Technical Field

The present invention relates to a method for producing a steviol glycoside-containing beverage, a beverage, and the like.

### Background Art

In recent years, beverages with various tastes (flavors) have been sold as packaged non-alcoholic beverages and alcoholic beverages with a wide range of alcohol strength in association with diversification of consumers' preferences in various parts of the world mainly including Japan. Examples of such alcoholic beverages include shochu-based drinks (chuhai), cocktails, and highballs made by adding fruit juices, flavorings, and the like to liquors such as shochu (Japanese distilled beverage), vodka, spirits, and whiskey. Furthermore, in recent years, due to an increase in health awareness, low-calorie products using a high-intensity sweetener such as aspartame, stevia, acesulfame K, or sucralose have been preferred and developed. However, it is known that these high-intensity sweeteners have a unique taste quality different from that of sugar, and attempts have been made to improve the taste quality.

For example, JP 2010-508824 T (Patent Document 1) discloses a sweetener composition containing at least one preservative, at least one high-intensity sweetener, and at least one sweet taste improving composition, and a beverage containing the sweetener composition.

JP 2016-158585 A (Patent Document 2) discloses that by adding a predetermined amount of stevia to an alcoholic beverage containing at least one acidulant of lactic acid and malic acid and having a content of the acidulant of from 0.005 to 2.000 g/100 mL in terms of citric acid, an alcoholic beverage in which aftertaste of sweetness and bitterness are suppressed is obtained.

### Citation List

### Patent Literature

Patent Document 1: JP 2010-508824 T
Patent Document 2: JP 2016-158585 A

### Summary of Invention

### Technical Problem

Under the circumstances as described above, development of a novel steviol glycoside-containing beverage having a good taste quality or a method for producing the steviol glycoside-containing beverage is awaited.

### Solution to Problem

As a result of confirmation by the present inventors, sensory properties have been confirmed in which, when a beverage containing a steviol glycoside is consumed, the top sweetness is not so strong, and bitterness is felt in the latter half. The present inventors have surprisingly found that the sensory properties of a beverage containing such a steviol glycoside can be improved by using a raw material obtained by a freeze grinding and immersion method of fruits. The present invention is based on such findings.

The present invention provides a method for producing a beverage, a beverage, and the like, which will be described below.
[1] A method for producing a beverage, including:
   obtaining a frozen matter by freezing one or more selected from the group consisting of fruits and vegetables;
   obtaining a micro ground matter by micro grinding the frozen matter;
   obtaining an alcohol immersion liquid by immersing the micro ground matter in an alcohol solution with a concentration at which one or more raw material components can be extracted; and
   blending the alcohol immersion liquid and a steviol glycoside in a beverage.
[2] The method according to [1], wherein the steviol glycoside includes one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside, and
   a blending amount of the one or more steviol glycosides is 3 mg/1000 ml or more with respect to the beverage.
[3] The method according to [2], wherein the blending amount of the one or more steviol glycosides is from 10 to 800 mg/1000 ml with respect to the beverage.
[4] The method according to [2] or [3], wherein the one or more steviol glycosides include one or more selected from the group consisting of rebaudioside A, rebaudioside D, and rebaudioside M.
[5] The method according to any of [1] to [4], wherein a blending amount of the alcohol immersion liquid is from 0.001% to 20% in terms of a pure alcohol ratio with respect to the beverage.
[6] The method according to any of [1] to [5], further including blending straight fruit juice or concentrated fruit juice into the beverage.
[7] The method according to any of [1] to [6], further including blending a low-intensity sweetener or a high-intensity sweetener other than the steviol glycoside.
[8] The method according to any of [1] to [7], further including, before blending the alcohol immersion liquid in the beverage, performing centrifugation.
[9] The method according to any of [1] to [8], wherein by the micro grinding, an average grain size of the frozen matter is 200 µm or less.
[10] The method according to any of [1] to [9], wherein an immersion liquid is obtained by immersing in an alcohol solution having a concentration of from 15 to 100 v/v%.
[11] The method according to any of [1] to [10], wherein a fruit of citrus fruits, pome fruits, or stone fruits is frozen to obtain a frozen matter.
[12] A beverage including an alcohol immersion liquid of one or more frozen micro ground matters selected from the group consisting of fruits and vegetables, and a steviol glycoside.
[13] The beverage according to [12], wherein an alcohol strength is from 0.1 to 40 v/v%.
[14] The beverage according to [12] or [13], wherein a content of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside is from 10 to 800 mg/1000 ml with respect to the beverage.
[15] The beverage according to any of [12] to [14], wherein sweetness intensity is from 0.1 to 20.
[16] The beverage according to any of [12] to [15], wherein a pH is from 2.0 to 4.6.
[17] The beverage according to any of [12] to [16], which is a beverage of citrus fruit-flavored, pome fruit-flavored, stone fruit-flavored, berry-flavored, nut-flavored, tropical and subtropical fruit-flavored, fruity vegetable-flavored, root vegetable-flavored, leaf and stem vegetable-flavored, fruit vegetable-flavored, aromatic vegetable and garnishing vegetable-flavored, energy drink-flavored, coffee-flavored, tea-flavored, cocoa-flavored, cola-flavored, dessert-flavored, or dairy drink-flavored beverage.
[18] The beverage according to any of [12] to [17], wherein the beverage is a packaged beverage.

### Advantageous Effects of Invention

According to one aspect of the present invention, a method for producing a novel beverage having a good taste quality is provided. According to another aspect of the present invention, a novel beverage having a good taste quality is provided. According to a preferred aspect of the present invention, there is provided a novel method for producing a beverage or a novel beverage in which the overall sweetness including the top and the latter bitterness are improved.

### Brief Description of Drawings

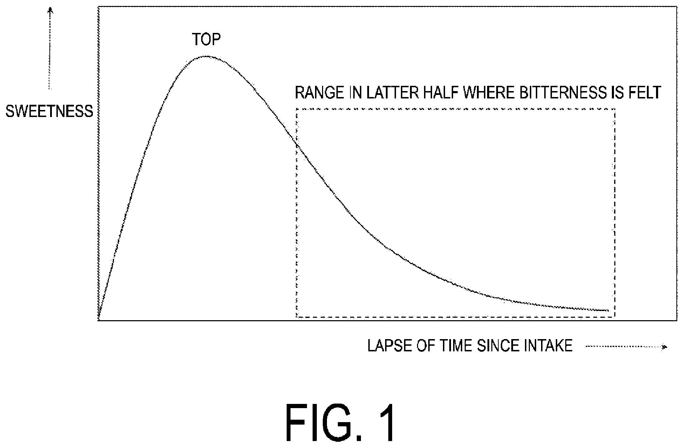

FIG. 1 is a diagram for explaining sensory properties in the present invention. When a beverage containing a steviol glycoside is contained in the mouth, sweetness onset is first felt, and the sweetness decreases with time after the sweetness reaches the peak (top). In a range surrounded by the broken line in FIG. 1 (range in the latter half after the top), it has been confirmed that the beverage containing the steviol glycoside has bitterness stronger than sweetness. On the other hand, according to a method in some embodiments of the present invention and a beverage obtained by the method, the overall sweetness including the top and the latter bitterness are improved, and natural sweetness can be felt.

### Description of Embodiments

The present invention will now be described in detail. The following embodiments are examples for explaining the present invention and are not intended to limit the present invention to these embodiments only. The present invention can be implemented in various embodiments as long as the gist of the present invention is not deviated.

All literature, patent application publications, patent publications, and other patent literature cited in the present specification are incorporated herein by reference. In addition, the present specification incorporates the contents described in the specification of the Japanese Patent Application (No. 2022-159732) filed on October 3, 2022, which serves as a basis for priority claim of the present application.

### 1. Method for producing beverage

The present invention provides, as one aspect, a method for producing the beverage described below (hereinafter also referred to as "the production method of the present invention").

The production method according to an aspect of the present invention is a method for producing a beverage, the method including:
obtaining a frozen matter by freezing one or more selected from the group consisting of fruits and vegetables;
obtaining a micro ground matter by micro grinding the frozen matter;
obtaining an alcohol immersion liquid by immersing the micro ground matter in an alcohol solution with a concentration at which one or more raw material components can be extracted; and
blending the alcohol immersion liquid and a steviol glycoside in the beverage. The beverage obtained by the production method according to an aspect of the present invention may be a non-alcoholic beverage or an alcoholic beverage.

As used herein, the term "non-alcoholic beverage" means a beverage having an alcohol strength of 0.05 v/v% or less. As used herein, the term "alcoholic beverage" refers to a beverage having an alcohol strength of more than 0.05 v/v%. The "alcohol" referred to herein means ethyl alcohol (ethanol) unless otherwise specified. The alcohol strength is not particularly limited. The beverage according to some embodiments of the present invention has an alcohol strength of from 0.1 to 40 v/v%. The alcohol strength herein is expressed by percentage on a volume/volume basis (v/v%). The alcohol strength of the beverage can be measured by a method specified by the Japanese Regional Taxation Bureau. For example, it can be measured by using a vibration densitometer. Specifically, the alcohol content can be determined by preparing a sample from the beverage by removing carbon dioxide gas through filtration or with ultrasonication, distilling the sample, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (H19 National Tax Agency Order No. 6, revised on June 22, 2007). Alternatively, when the alcohol strength of the liquor used is known, it can be calculated from the alcohol strength thereof and the amount thereof added.

According to the production method according to a preferred embodiment of the present invention, there is provided a novel steviol glycoside-containing beverage in which a unique taste quality of the steviol glycoside contained in the beverage is improved, and the overall sweetness including the top and the latter bitterness are improved. As demonstrated in the examples herein, such improvement in taste quality is not obtained with common fruit juices (for example, concentrated and reduced fruit juice) and is only observed with an alcohol immersion liquid. From this, the effect according to the preferred embodiment of the present invention is an unexpected effect. Without wishing to be bound by theory, it is presumed that a synergistic effect of the alcohol immersion liquid and the steviol glycoside results in improvement in taste quality. Although an amount of fruit juice used in the examples is significantly larger than an amount of component derived from fruit in the alcohol immersion liquid, improvement in taste quality is hardly observed; therefore, it is considered that the same effect as that of the present invention cannot be obtained even if an amount of fruit juice added is increased.

**In** the production method according to an aspect of the present invention, one or more selected from the group consisting of fruits and vegetables are frozen to obtain a frozen matter. The fruits and vegetables are not particularly limited, and various fruits and vegetables can be used. For example, citrus fruits (mandarin orange, hassaku orange, Citrus iyo (Iyokan), navel orange, Valencia orange, Hyuganatsu (Citrus tamurana), Kiyomi orange, ponkan orange, buntan (Citrus grandis), grapefruit, lemon, shequasar (Citrus depressa), tangor, natsumikan (Citrus natsudaidai), Amanatsu, Citrus sudachi, kabosu (Citrus sphaerocarpa), daidai (Citrus aurantium), sanboukan (Citrus sulcata), oroblanco, lime, yuzu, kumquat, etc.), pome fruits (apple, Japanese pear, western pear, persimmon, loquat, pomegranate, and karin (Chinese quince, Pseudocydonia sinensis), etc.), stone fruits (peach, plum, nectarine, cherry, Japanese plum (ume), apricot, etc.), berries (grape, fig, etc.), nuts (chestnut, almond, pistachio, cashew nut, etc.), tropical and subtropical fruits (pineapple, banana, papaya, lychee, kiwi fruit, mango, etc.), fruity vegetables (strawberry, melon, watermelon, papaya, etc.), and the like can be used as the fruits. Alternatively, it is also possible to use chocolate vine (Akebia quinata), atemoya, avocado, olive, blackberry, blueberry, raspberry, gooseberry, tangelo, cherimoya, durian, jujube, date palm, mangosteen, bayberry, haskap, avocado, passion fruit, acerola, kiwano, guava, gummy, pitaya, loquat, longan, white sapote, oriental melon, quince, coconut, star fruit, and the like. As the vegetable, root vegetables (carrot, beet, sweet potato, etc.), stem vegetables (celery, parsley, watercress, etc.), leaf vegetables (spinach, lettuce, cabbage), fruit vegetables (cucumber, squash, bell pepper, tomato, sweet corn, etc.), herbs (mint, lemongrass, coriander, Italian parsley, rosemary, etc.), aromatic vegetables and garnishing vegetables (ginger, perilla (shiso), chili pepper, cinnamon, peppercorn, etc.) can be used. Two or more kinds of fruits and vegetables may be used in combination. In the production method according to a preferred embodiment of the present invention, a fruit of citrus fruits, pome fruits, or stone fruits is frozen to obtain a frozen matter, and more preferably one or more selected from lemon, orange, mandarin orange, grapefruit, peach, grape, shekwasha (Citrus depressa), apple, yuzu, Japanese pear, and Western pear are frozen to obtain a frozen matter. In the present specification, the "fruit(s)" or "vegetable(s)" refers to a whole raw fruit or whole vegetable containing its juice and solid content unless otherwise specified.

Any freezing machine and/or freezing method may be used for freezing fruits and vegetables, as long as they can be micro ground by a method described later. For example, any of an air freezing method, an air blast freezing method, a contact freezing method, a brine freezing method, a freezing method using liquid nitrogen, and other methods may be used. From the viewpoint of rapid freezing, the freezing method using liquid nitrogen is preferable.

The freezing temperature of fruits and vegetables is not particularly limited as long as the fruits and vegetables are sufficiently frozen and can be micro ground by the method described later. Preferably, the freezing temperature may be -40°C or lower, -50°C or lower, -60°C or lower, -70°C or lower, -80°C or lower, -90°C or lower, -100°C or lower, -110°C or lower, - 120°C or lower, -130°C or lower, -140°C or lower, -150°C or lower, -160°C or lower, -170°C or lower, -180°C or lower, or -190°C or lower. For example, the fruit and vegetable may be frozen at -196°C using liquid nitrogen. Alternatively, the freezing temperature is preferably equal to or lower than the embrittlement temperature of fruits or vegetables. In the present specification, the "embrittlement temperature" refers to a temperature at which a matter is rapidly embrittled (becomes brittle and is easy to break) at a low temperature. The embrittlement temperature of fruits and vegetables can be determined, for example, by the method described in JP 5154230 B.

The fruit and vegetable may be frozen as it is without being processed, or may be frozen after being cut into a predetermined size in advance. The whole fruit and vegetable with a non-edible portion such as seeds and peel may be cut, or may be cut after removing the non-edible portion in advance. Preferably, the fruit and vegetable are frozen as they are without being processed. It is preferable that the fruit and vegetable with seeds, peel, and the like are subjected to micro grinding and immersion described later, from the viewpoint that the flavor of the whole fruit and the whole vegetable is provided.

In the production method according to one aspect of the present invention, the frozen matter obtained by the method described above is micro ground to obtain a micro ground matter. When the frozen matter is micro ground, the micro ground matter is not particularly limited as long as extraction described later can be sufficiently and easily performed without applying heat. For example, micro grinding can be performed using a freeze pulverizer ("LINREX MILL" available from Hosokawa Micron Group) and the like. An average grain size of the micro ground matter obtained by micro grinding the frozen matter is preferably about 200 µm or less (or from 1 to 200 µm), and more preferably about 100 µm or less (or from 1 to 100 µm) when measured by the method described in Examples. In the present specification, when the average grain size is indicated for the micro ground matter, the average grain size means a median diameter (grain size corresponding to 50% of a plus-mesh distribution curve) unless otherwise specified.

In the production method according to one aspect of the present invention, the micro ground matter obtained by the above method is immersed in alcohol having a concentration at which one or more raw material components can be extracted to obtain an alcohol immersion liquid (hereinafter, also referred to as "alcohol with immersed frozen and micro ground matter" in the present specification.). In the present specification, the "alcohol solution having the concentration at which one or more raw material components can be extracted" is not particularly limited as long as the alcohol solution is an alcohol solution having a concentration at which one or more kinds of fruit or vegetable components (for example, fragrance component) used for the raw material can be extracted.

The alcohol used for immersion is not particularly limited as long as it is an alcohol having the concentration at which one or more kinds of raw material components as described above can be extracted. For example, alcohol having an alcohol concentration of about 15 v/v% to about 100 v/v% can be used. Preferably, the alcohol concentration can be from about 20 v/v% to about 70 v/v% or from about 30 v/v% to about 60 v/v%. As such an alcohol, sake (Japanese rice alcoholic beverage), shochu, whiskey, brandy, raw material alcohol, spirits (grain spirits, neutral spirits), or the like can be used. By changing the alcohol concentration of the alcohol solution used for immersion, the type and amount of a fragrance component and an effective component extracted into the alcohol solution can be changed. Specifically, in the case of using a fruit (particularly citrus fruits in particular, especially grapefruit and lemon), the alcohol concentration can be about 20 v/v% or more, preferably about 30 v/v% or more, for example, about 40 v/v% from the viewpoint of providing sufficient flavor, and can be preferably about 60 v/v% or less from the viewpoint of preventing undesirable taste (for example, bitterness) and odor (for example, mold odor) from being provided. Alternatively, when a stone fruit (particularly peach) is used, the alcohol concentration can be about 20 v/v% or more, and preferably about 25 v/v% or more from the viewpoint of providing sufficient flavor, and can be preferably about 60 v/v% or less, and more preferably about 40 v/v% or less from the viewpoint of preventing undesirable taste (for example, bitterness) and odor (for example, mold odor) from being provided.

The immersion ratio and immersion time at the time of immersion can be appropriately determined according to the type of material, the grain size of the micro ground matter, the type or amount of the component to be extracted, extraction efficiency to be obtained, and the like. The immersion ratio is generally about from 1 g to about 500 g, preferably from about 5 g to about 300 g, more preferably from about 10 g to about 200 g of a frozen micro ground matter with respect to 1 L of the alcohol solution. The immersion time is generally preferably from about half a day to several months, and is preferably from about 1 day to about 3 days in the case of a citrus fruit, and may be several months in the case of a stone fruit such as Japanese apricot.

By adjusting the conditions for immersion, the amount of components contained in the immersion liquid and the fragrance can be adjusted. For example, by increasing the immersion time or increasing an amount of the fruit to be immersed, the amount of component contained in the immersion liquid can be increased, and the fragrance can be strengthened. Therefore, by changing the immersion condition depending on the raw material, stable quality can be maintained in the obtained alcohol immersion liquid or a beverage using the alcohol immersion liquid.

From a leachate after completion of the extraction step, the solid content can be removed as it is or by filtration to obtain an alcohol immersion liquid. For the filtration, usual means used for a similar purpose in this field, for example, a method using diatomaceous earth can be applied. The obtained alcohol immersion liquid may be subjected to an additional treatment such as distillation, as necessary.

The production method according to a preferred embodiment of the present invention further includes performing centrifugation before blending the alcohol immersion liquid in a beverage. The centrifugation is preferable because the overall sweetness including the top of the beverage and the latter bitterness are better. The centrifugal separation can be performed by a normal method in the present technical field, and is not particularly limited as long as the solid content can be removed after sufficiently separating the liquid and the solid content. For example, the centrifugation can be performed using a "disc type centrifuge (model: BRPX617S)" available from ALFA LAVAL. The conditions for centrifugation are also not particularly limited, and, for example, the centrifugation can be performed at from 3000 to 5000 rpm for about from 10 to 60 minutes. The temperature at the time of centrifugation is also not particularly limited, and may be, for example, room temperature.

In the production method according to one aspect of the present invention, an alcohol immersion liquid and a steviol glycoside are blended in a beverage. This blending method is not particularly limited as long as a beverage containing the alcohol immersion liquid and the steviol glycoside is obtained. The alcohol immersion liquid and the steviol glycoside may be added separately or simultaneously to a beverage base (for example, water or carbonated water), or either one of them may be added first. In addition, the steviol glycoside may be added to the alcohol immersion liquid before filtration, then filtered, and added to the beverage.

### Steviol Glycoside

The steviol glycoside is a sweet substance having, as a skeleton, steviol which is a type of diterpenoid contained in leaves of Stevia rebaudiana belonging to the Asteraceae family. Many steviol glycosides have a sweetness that is several tens to several hundreds of times that of sugar, and thus are used in the food and drink industry as calorie-free sweeteners.

A steviol glycoside is used in the present invention. The steviol glycoside is not particularly limited, and examples thereof include stevioside, rebaudioside A (hereinafter rebaudioside is sometimes abbreviated as Reb), rebaudioside B, rebaudioside C, rebaudioside D, rebaudioside E, rebaudioside F, rebaudioside I, rebaudioside J, rebaudioside K, rebaudioside L, rebaudioside M, rebaudioside N, rebaudioside O, rebaudioside Q, rebaudioside R, dulcoside A, dulcoside C, steviolmonoside, steviolbioside, and rubusoside. In an embodiment of the present invention, one or more steviol glycosides selected from the group consisting of stevioside, rebaudioside A, rebaudioside B, rebaudioside C, rebaudioside D, rebaudioside E, rebaudioside F, rebaudioside I, rebaudioside J, rebaudioside K, rebaudioside L, rebaudioside M, rebaudioside N, rebaudioside O, rebaudioside Q, rebaudioside R, dulcoside A, dulcoside C, steviolmonoside, steviolbioside, and rubusoside are used. In the production method according to a preferred embodiment of the present invention, the steviol glycoside contains one or more steviol glycosides selected from the group consisting of rebaudioside A, rebaudioside B, rebaudioside C, rebaudioside D, rebaudioside E, rebaudioside F, rebaudioside M, rebaudioside N, and rebaudioside O. The steviol glycoside in the production method according to another preferred embodiment of the present invention contains one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside. The steviol glycoside in the production method according to a further preferred embodiment of the present invention contains one or more steviol glycosides selected from the group consisting of rebaudioside A, rebaudioside D, and rebaudioside M. The steviol glycoside used in the present invention may be directly extracted from stevia or may be produced by chemically or biochemically adding one or more sugar molecules such as glucose to a compound having another structure and contained in a stevia extract.

The blending amount of the steviol glycoside is not particularly limited, and is preferably 3 mg/1000 ml or more with respect to the beverage. By blending the steviol glycoside in an amount of 3 mg/1000 ml or more, a beverage having good overall sweetness including the top and good latter bitterness is provided. In some embodiments of the present invention, the blending amount of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside may be, with respect to the beverage, 3 mg/1000 ml or more, from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. When two or more kinds of steviol glycosides are blended, the blending amount means a total amount of the two or more kinds of steviol glycosides. Preferably, the blending amount of the one or more steviol glycosides may be from 5 to 900 mg/1000 ml, from 10 to 800 mg/1000 ml, or from 50 to 700 mg/1000 ml with respect to the beverage.

In some embodiments of the present invention, the steviol glycoside includes one or more selected from the group consisting of rebaudioside A, rebaudioside D, and rebaudioside M. In another embodiment of the present invention, the one or more steviol glycosides are one or more selected from the group consisting of rebaudioside A, rebaudioside D, and rebaudioside M. In an embodiment of the present invention, the steviol glycoside may consist essentially of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside. Preferably, the steviol glycoside consists essentially of one or more steviol glycosides selected from the group consisting of rebaudioside A, rebaudioside D, and rebaudioside M. As used herein, the phrase "consisting essentially of" means that the steviol glycosides used in the present invention may include a minor amount of a steviol glycoside other than those described herein. For example, when the steviol glycoside consists essentially of one or more steviol glycosides selected from the group consisting of rebaudioside A, rebaudioside D, and rebaudioside M, it means that rebaudioside A, rebaudioside D, and/or rebaudioside M accounts for preferably 85 wt.% or more, more preferably 90 wt.% or more, and even more preferably 95 wt.% or more of the steviol glycosides. For example, it can be understood that a commercially available rebaudioside A preparation having a purity of 90 wt.% or more contains steviol glycosides whose 90 wt.% or more is composed of rebaudioside A.

In the production method in some embodiments of the present invention, rebaudioside A is blended in the beverage, and the blending amount of the rebaudioside A may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the blending amount of rebaudioside A may be from 5 to 900 mg/1000 ml, from 10 to 800 mg/1000 ml, or from 50 to 700 mg/1000 ml.

In the production method in some embodiments of the present invention, rebaudioside D is blended in the beverage, and the blending amount of the rebaudioside D may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the blending amount of rebaudioside D may be from 5 to 900 mg/1000 ml, from 10 to 800 mg/1000 ml, or from 50 to 700 mg/1000 ml.

In the production method in some embodiments of the present invention, rebaudioside M is blended in the beverage, and the blending amount of the rebaudioside M may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the blending amount of rebaudioside M may be from 5 to 900 mg/1000 ml, from 10 to 800 mg/1000 ml, or from 50 to 700 mg/1000 ml.

In the production method in some embodiments of the present invention, one or more selected from the group consisting of rebaudioside A, rebaudioside D, and rebaudioside M are blended in the beverage, and the total blending amount may be from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the total blending amount of one or more selected from the group consisting of rebaudioside A, rebaudioside D, and rebaudioside M may be from 5 to 900 mg/1000 ml, from 10 to 800 mg/1000 ml, or from 50 to 700 mg/1000 ml.

The blending amount of the alcohol immersion liquid is not particularly limited, and is preferably from 0.001% to 20% in terms of a pure alcohol ratio with respect to the beverage. In the present specification, the "pure alcohol ratio of the alcohol immersion liquid to the beverage" is a volume ratio of an amount of alcohol derived from the alcohol immersion liquid to a total amount of alcohol in the beverage. For example, the pure alcohol ratio can be obtained by the method described in Examples of the present specification. The alcohol content other than the alcohol immersion liquid can be prepared using sake, shochu, whiskey, brandy, raw material alcohol, spirits (grain spirits, neutral spirits), or the like. When the blending amount of the alcohol immersion liquid is 20% or less in terms of the pure alcohol ratio with respect to the beverage, intensity of the flavor of the fruit or vegetable is moderate, and the sweetness can also be moderately felt, which is preferable. In some embodiments of the present invention, the blending amount of the alcohol immersion liquid may be from 0.005% to 20%, from 0.005% to 19%, from 0.005% to 18%, from 0.005% to 17%, from 0.005% to 16%, from 0.005% to 15%, from 0.01% to 20%, from 0.01% to 19%, from 0.01% to 18%, from 0.01% to 17%, from 0.01% to 16%, from 0.01% to 15%, from 0.05% to 20%, from 0.05% to 19%, from 0.05% to 18%, from 0.05% to 17%, from 0.05% to 16%, from 0.05% to 15%, from 0.1% to 20%, from 0.1% to 19%, from 0.1% to 18%, from 0.1% to 17%, from 0.1% to 16%, from 0.01% to 15%, from 0.5% to 20%, from 0.5% to 19%, from 0.5% to 18%, from 0.5% to 17%, from 0.5% to 16%, from 0.5% to 15%, from 1% to 20%, from 1% to 19%, from 1% to 18%, from 1% to 17%, from 1% to 16%, from 1% to 15%, from 5% to 20%, from 5% to 19%, from 5% to 18%, from 5% to 17%, from 5% to 16%, from 5% to 15%, from 10% to 20%, from 10% to 19%, from 10% to 18%, from 10% to 17%, from 10% to 16%, or from 10% to 15%, in terms of the pure alcohol ratio with respect to the beverage. The blending amount is preferably from 0.01% to 18%, from 0.1% to 17%, or from 0.1% to 16%. Alternatively, a ratio of the alcohol immersion liquid blended in the beverage may be from 0.01 to 100 ml/1000 ml, from 0.05 to 50 ml/1000 ml, or from 0.1 to 25 ml/1000 ml in volume ratio.

The production method according to some embodiments of the present invention further includes blending straight fruit juice (squeezed fruit juice) or concentrated fruit juice into the beverage. In the present specification, the term "straight fruit juice or concentrated fruit juice" means fruit juice to be blended separately from the alcohol with immersed frozen and micro ground matter of fruits or vegetables. The concentrated fruit juice may be prepared by either a heat concentration method or a freeze concentration method. It is preferable to further blend the straight fruit juice or the concentrated fruit juice since the taste of the fruit is enhanced. The content of fruit juice in the beverage according to an embodiment of the present invention may be from 0.1% to 5%, from 0.5% to 4%, or from 1% to 3% in terms of fruit juice proportion. In the present specification, the "fruit juice proportion" is a relative concentration when a straight fruit juice produced by squeezing a fruit is taken as 100%, and can be converted based on a standard (°Bx) for a sugar refractometer reading or a standard (%) for acidity indicated in the Japanese Agricultural Standards (JAS) for fruit beverages.

The values of the standards (unit: °Bx) for sugar refractometer readings of representative fruits are 11 for orange, 9 for Japanese mandarin, 9 for grapefruit, 11 for pineapple, 7 for cranberry, 8 for blueberry and guava, 23 for banana, 9 for papaya, 14 for passion fruit, 13 for mango, 10 for apple, 11 for grape, 8 for peach, 8 for Japanese pear, 11 for pear, 7 for apricot, and 10 for melon and kiwi fruit. In addition, the standards (unit: %) for acidity of representative fruits are 4.5 for lemon, 6 for lime, 3.5 for Japanese apricot, and 3.5 for kabosu (Citrus sphaerocarpa).

Specifically, the fruit juice proportion can be calculated by the following conversion equation from the concentration factor of the fruit juice calculated from the blending amount (g) of fruit juice to be blended in 100 mL of the beverage and the standard (°Bx) for a sugar refractometer reading or the standard (%) for acidity. [Fruit juice proportion (%)] = [blending amount (g) of fruit juice] × [concentration factor]/100 mL × 100

For example, the JAS standard for orange juice is Bx 11°, and thus when 6.0 wt.% of a concentrated orange juice with a Bx of 55° is blended in a beverage, the fruit juice proportion is 30%. When the fruit juice proportion of the fruit juice is converted based on a JAS standard sugar refractometer reading, the sugar refractometer readings of sugar, honey, and/or the like added to the fruit juice are excluded.

The production method according to some embodiments of the present invention further includes blending a low-intensity sweetener or a high-intensity sweetener other than the steviol glycoside. By blending various low-intensity sweeteners or various high-intensity sweeteners other than the steviol glycoside, it is possible to adjust the taste quality, adjust calories, and the like. The low-intensity sweetener or the high-intensity sweetener other than the steviol glycoside that can be blended will be described in detail in the section of "2. Beverage containing steviol glycoside and alcohol with immersed frozen and micro ground matter of fruit and/or vegetable" described later.

The production method according to some embodiments of the present invention may include a packaging step and a subsequent sterilization step. Packaging can be performed by any known method. In the case of performing heat sterilization after packaging, the type thereof is not particularly limited, and the heat sterilization can be performed using, for example, a common method, such as UHT sterilization and retort sterilization. The temperature of the heat sterilization process is not particularly limited and is, for example, from 50 to 130°C and preferably from 50 to 120°C for 10 to 40 minutes. However, if a sterilization value equivalent to that in the above-described conditions is obtained, a sterilization at an appropriate temperature for several seconds, for example, from 5 to 30 seconds, is also acceptable.

### [Exemplary embodiments of beverage of present invention]

Exemplary embodiments of the beverage of the present invention are described below, and the present invention is not limited to the following exemplary embodiments.

In an embodiment of the present invention, there is provided a method for producing a beverage, the method including:
freezing one or more selected from the group consisting of lemon, orange, mandarin orange, grapefruit, peach, grape, shekwasha (Citrus depressa), apple, yuzu, Japanese pear, and Western pear to obtain a frozen matter;
micro grinding the frozen matter to obtain a micro ground matter;
immersing the micro ground matter in an alcohol solution having a concentration of from 15 to 100 v/v% to obtain an alcohol immersion liquid; and
blending the alcohol immersion liquid and one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside in the beverage.

In an embodiment of the present invention, there is provided a method for producing a beverage, the method including:
freezing one or more selected from the group consisting of citrus fruits, pome fruits, and stone fruits to obtain a frozen matter;
micro grinding the frozen matter to obtain a micro ground matter;
immersing the micro ground matter in an alcohol solution having a concentration of from 15 to 100 v/v% to obtain an alcohol immersion liquid; and
blending the alcohol immersion liquid and one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside in the beverage,
wherein a blending amount of the one or more steviol glycosides is 3 mg/1000 ml or more or 10 to 800 mg/1000 ml with respect to the beverage.

In an embodiment of the present invention, there is provided a method for producing a beverage, the method including:
freezing one or more selected from the group consisting of citrus fruits, pome fruits, and stone fruits to obtain a frozen matter;
micro grinding the frozen matter to obtain a micro ground matter;
immersing the micro ground matter in an alcohol solution having a concentration of from 15 to 100 v/v% to obtain an alcohol immersion liquid; and
blending the alcohol immersion liquid and one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside in the beverage,
wherein a blending amount of the alcohol immersion liquid is from 0.001% to 20% in terms of a pure alcohol ratio with respect to the beverage.

### 2. Beverage containing steviol glycoside and alcohol with immersed frozen and micro ground matter of fruit and/or vegetable

As another aspect, the present invention provides the following beverage (hereinafter, also referred to as "the beverage of the present invention (alternatively, the beverage of the present invention)").

A beverage according to one aspect of the present invention is a beverage containing an immersion liquid of one or more frozen micro ground matters selected from the group consisting of fruits and vegetables, and a steviol glycoside. The beverage according to an embodiment of the present invention may be a non-alcoholic beverage or may be an alcoholic beverage.

In the present specification, the "alcohol immersion liquid of one or more frozen micro ground matters selected from the group consisting of fruits and vegetables" means an immersion liquid obtained by freezing one or more selected from the group consisting of fruits and vegetables, micro grinding them, and then immersing them in an alcohol solution. Therefore, the immersion liquid used in some embodiments of the present invention may be obtained according to "1. Method for producing beverage" of the present specification or may be obtained by other methods. For example, the immersion liquid may be obtained based on the method described in JP 4892348 B. In a preferred embodiment of the present invention, the immersion liquid is obtained according to "1. Method for producing beverage" of the present specification.

The beverage according to an aspect of the present invention may contain an immersion liquid of a frozen micro ground matter of various fruits or vegetables. In the beverage according to some embodiments of the present invention, citrus fruits (mandarin orange, hassaku orange, Citrus iyo (Iyokan), navel orange, Valencia orange, Hyuganatsu (Citrus tamurana), Kiyomi orange, ponkan orange, buntan (Citrus grandis), grapefruit, lemon, shequasar (Citrus depressa), tangor, natsumikan (Citrus natsudaidai), Amanatsu, Citrus sudachi, kabosu (Citrus sphaerocarpa), daidai (Citrus aurantium), sanboukan (Citrus sulcata), oroblanco, lime, yuzu, kumquat, etc.), pome fruits, pome fruits (apple, Japanese pear, western pear, persimmon, loquat, pomegranate, Karin (Chinese quince), etc.), stone fruits (peach, plum, nectarine, cherry, Japanese plum (ume), apricot, etc.), berries (grape, fig, etc.), nuts (chestnut, almond, pistachio, cashew nut, etc.), tropical and subtropical fruits (pineapple, banana, papaya, lychee, kiwi fruit, mango, etc.), fruity vegetables (strawberry, melon, watermelon, papaya, etc.), and the like, can be used. Alternatively, it is also possible to use chocolate vine (Akebia quinata), atemoya, avocado, olive, blackberry, blueberry, raspberry, gooseberry, tangelo, cherimoya, durian, jujube, date palm, mangosteen, bayberry, haskap, avocado, passion fruit, acerola, kiwano, guava, gummy, pitaya, loquat, longan, white sapote, oriental melon, quince, coconut, star fruit, and the like. Also included is an immersion liquid of a frozen micro ground matter of: root vegetables (carrot, beet, sweet potato, etc.); stem vegetables (celery, parsley, watercress, etc.); leaf vegetables (spinach, lettuce, cabbage); fruit vegetables (cucumber, squash, bell pepper, tomato, sweet corn, etc.); herbs (mint, lemongrass, coriander, Italian parsley, rosemary, etc.); aromatic vegetables and garnishing vegetables (ginger, perilla, chili pepper, cinnamon, peppercorn, etc.). In the beverage according to a preferred embodiment of the present invention, an immersion liquid of a fruit of citrus fruits, pome fruits, or stone fruits is used, and more preferably an immersion liquid of one or more selected from lemon, orange, mandarin orange, grapefruit, peach, grape, shekwasha (Citrus depressa), apple, yuzu, Japanese pear, and Western pear is used. As the immersion liquid, immersion liquids of a plurality of kinds of frozen micro ground matters may be used in combination. The immersion liquid may contain the frozen micro ground matter, or may be obtained by removing the solid content by filtration. The content of the immersion liquid is not particularly limited, and the immersion liquid may be contained in the same amount as the blending amount described in "1. Method for producing beverage" of the present specification.

The content of the steviol glycoside is not particularly limited, and is preferably 3 mg/1000 ml or more with respect to the beverage. By containing the steviol glycoside in an amount of 3 mg/1000 ml or more, a beverage having good overall sweetness including the top and good latter bitterness is provided. In some embodiments of the present invention, the content of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside may be, with respect to the beverage, 3 mg/1000 ml or more, from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. When two or more steviol glycosides are contained, the content means the total amount of the two or more kinds of steviol glycosides. Preferably, the content of the one or more steviol glycosides may be from 5 to 900 mg/1000 ml, from 10 to 800 mg/1000 ml, or from 50 to 700 mg/1000 ml with respect to the beverage. The content of the steviol glycoside in the beverage may be calculated from amounts of raw materials blended, or may be measured using a known analysis method such as liquid chromatography, and is preferably measured by an HPLC method in accordance with JECFA (2010).

In the beverage in some embodiments of the present invention, the content of rebaudioside A may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the content of rebaudioside A may be from 5 to 900 mg/1000 ml, from 10 to 800 mg/1000 ml, or from 50 to 700 mg/1000 ml.

In the beverage in some embodiments of the present invention, the content of rebaudioside D may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the content of rebaudioside D may be from 5 to 900 mg/1000 ml, from 10 to 800 mg/1000 ml, or from 50 to 700 mg/1000 ml.

In the beverage in some embodiments of the present invention, the content of rebaudioside M may be from 3 to 1000 mg/1000 ml, from 3 to 900 mg/1000 ml, from 3 to 800 mg/1000 ml, from 3 to 700 mg/1000 ml, from 3 to 600 mg/1000 ml, from 3 to 550 mg/1000 ml, from 3 to 500 mg/1000 ml, from 3 to 400 mg/1000 ml, from 3 to 300 mg/1000 ml, from 3 to 200 mg/1000 ml, from 3 to 100 mg/1000 ml, from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the content of rebaudioside M may be from 5 to 900 mg/1000 ml, from 10 to 800 mg/1000 ml, or from 50 to 700 mg/1000 ml.

In the beverage in some embodiments of the present invention, the total content of one or more selected from the group consisting of rebaudioside A, rebaudioside D, and rebaudioside M may be from 5 to 1000 mg/1000 ml, from 5 to 900 mg/1000 ml, from 5 to 800 mg/1000 ml, from 5 to 700 mg/1000 ml, from 5 to 600 mg/1000 ml, from 5 to 550 mg/1000 ml, from 5 to 500 mg/1000 ml, from 5 to 400 mg/1000 ml, from 5 to 300 mg/1000 ml, from 5 to 200 mg/1000 ml, from 5 to 100 mg/1000 ml, from 10 to 1000 mg/1000 ml, from 10 to 900 mg/1000 ml, from 10 to 800 mg/1000 ml, from 10 to 700 mg/1000 ml, from 10 to 600 mg/1000 ml, from 10 to 550 mg/1000 ml, from 10 to 500 mg/1000 ml, from 10 to 400 mg/1000 ml, from 10 to 300 mg/1000 ml, from 10 to 200 mg/1000 ml, from 10 to 100 mg/1000 ml, from 20 to 1000 mg/1000 ml, from 20 to 900 mg/1000 ml, from 20 to 800 mg/1000 ml, from 20 to 700 mg/1000 ml, from 20 to 600 mg/1000 ml, from 20 to 550 mg/1000 ml, from 20 to 500 mg/1000 ml, from 20 to 400 mg/1000 ml, from 20 to 300 mg/1000 ml, from 20 to 200 mg/1000 ml, from 20 to 100 mg/1000 ml, from 30 to 1000 mg/1000 ml, from 30 to 900 mg/1000 ml, from 30 to 800 mg/1000 ml, from 30 to 700 mg/1000 ml, from 30 to 600 mg/1000 ml, from 30 to 550 mg/1000 ml, from 30 to 500 mg/1000 ml, from 30 to 400 mg/1000 ml, from 30 to 300 mg/1000 ml, from 30 to 200 mg/1000 ml, from 30 to 100 mg/1000 ml, from 50 to 1000 mg/1000 ml, from 50 to 900 mg/1000 ml, from 50 to 800 mg/1000 ml, from 50 to 700 mg/1000 ml, from 50 to 600 mg/1000 ml, from 50 to 550 mg/1000 ml, from 50 to 500 mg/1000 ml, from 50 to 400 mg/1000 ml, from 50 to 300 mg/1000 ml, from 50 to 200 mg/1000 ml, from 50 to 100 mg/1000 ml, from 100 to 1000 mg/1000 ml, from 100 to 900 mg/1000 ml, from 100 to 800 mg/1000 ml, from 100 to 700 mg/1000 ml, from 100 to 600 mg/1000 ml, from 100 to 550 mg/1000 ml, from 100 to 500 mg/1000 ml, from 100 to 400 mg/1000 ml, from 100 to 300 mg/1000 ml, from 100 to 200 mg/1000 ml, from 200 to 1000 mg/1000 ml, from 200 to 900 mg/1000 ml, from 200 to 800 mg/1000 ml, from 200 to 700 mg/1000 ml, from 200 to 600 mg/1000 ml, from 200 to 550 mg/1000 ml, from 200 to 500 mg/1000 ml, from 200 to 400 mg/1000 ml, from 200 to 300 mg/1000 ml, from 300 to 1000 mg/1000 ml, from 300 to 900 mg/1000 ml, from 300 to 800 mg/1000 ml, from 300 to 700 mg/1000 ml, from 300 to 600 mg/1000 ml, from 300 to 550 mg/1000 ml, from 300 to 500 mg/1000 ml, from 300 to 400 mg/1000 ml, from 400 to 1000 mg/1000 ml, from 400 to 900 mg/1000 ml, from 400 to 800 mg/1000 ml, from 400 to 700 mg/1000 ml, from 400 to 600 mg/1000 ml, from 400 to 550 mg/1000 ml, or from 400 to 500 mg/1000 ml. In a preferred embodiment of the present invention, the total content of one or more selected from the group consisting of rebaudioside A, rebaudioside D, and rebaudioside M may be from 5 to 900 mg/1000 ml, from 10 to 800 mg/1000 ml, or from 50 to 700 mg/1000 ml.

The beverage in some embodiments of the present invention is an alcoholic beverage, and the alcohol strength may be from 0.1 to 40 v/v%, from 0.1 to 35 v/v%, from 0.1 to 30 v/v%, from 0.1 to 25 v/v%, from 0.1 to 20 v/v%, from 0.1 to 15 v/v%, from 0.1 to 12 v/v%, from 0.5 to 40 v/v%, from 0.5 to 35 v/v%, from 0.5 to 30 v/v%, from 0.5 to 25 v/v%, from 0.5 to 20 v/v%, from 0.5 to 15 v/v%, from 0.5 to 12 v/v%, from 0.6 to 40 v/v%, from 0.6 to 35 v/v%, from 0.6 to 30 v/v%, from 0.6 to 25 v/v%, from 0.6 to 20 v/v%, from 0.6 to 15 v/v%, from 0.6 to 12 v/v%, from 1 to 40 v/v%, from 1 to 35 v/v%, from 1 to 30 v/v%, from 1 to 25 v/v%, from 1 to 20 v/v%, from 1 to 15 v/v%, from 1 to 14 v/v%, from 1 to 13 v/v%, from 1 to 12 v/v%, from 1 to 11 v/v%, from 1 to 10 v/v%, from 1 to 9 v/v%, from 1 to 8 v/v%, from 1 to 7 v/v%, from 1 to 6 v/v%, from 1 to 5 v/v%, from 1 to 4 v/v%, from 1 to 3 v/v%, from 1 to 2 v/v%, from 2 to 40 v/v%, from 2 to 35 v/v%, from 2 to 30 v/v%, from 2 to 25 v/v%, from 2 to 20 v/v%, from 2 to 15 v/v%, from 2 to 14 v/v%, from 2 to 13 v/v%, from 2 to 12 v/v%, from 2 to 11 v/v%, from 2 to 10 v/v%, from 2 to 9 v/v%, from 2 to 8 v/v%, from 2 to 7 v/v%, from 2 to 6 v/v%, from 2 to 5 v/v%, from 2 to 4 v/v%, from 2 to 3 v/v%, from 2 to 2 v/v%, from 3 to 40 v/v%, from 3 to 35 v/v%, from 3 to 30 v/v%, from 3 to 25 v/v%, from 3 to 20 v/v%, from 3 to 15 v/v%, from 3 to 14 v/v%, from 3 to 13 v/v%, from 3 to 12 v/v%, from 3 to 11 v/v%, from 3 to 10 v/v%, from 3 to 9 v/v%, from 3 to 8 v/v%, from 3 to 7 v/v%, from 3 to 6 v/v%, from 3 to 5 v/v%, from 3 to 4 v/v%, from 4 to 40 v/v%, from 4 to 35 v/v%, from 4 to 30 v/v%, from 4 to 25 v/v%, from 4 to 20 v/v%, from 4 to 15 v/v%, from 4 to 14 v/v%, from 4 to 13 v/v%, from 4 to 12 v/v%, from 4 to 11 v/v%, from 4 to 10 v/v%, from 4 to 9 v/v%, from 4 to 8 v/v%, from 4 to 7 v/v%, from 4 to 6 v/v%, from 4 to 5 v/v%, from 5 to 40 v/v%, from 5 to 35 v/v%, from 5 to 30 v/v%, from 5 to 25 v/v%, from 5 to 20 v/v%, from 5 to 14 v/v%, from 5 to 13 v/v%, from 5 to 12 v/v%, from 5 to 11 v/v%, from 5 to 10 v/v%, from 5 to 9 v/v%, from 5 to 8 v/v%, from 5 to 7 v/v%, or from 5 to 6 v/v%. The alcohol strength of the beverage according to a preferred embodiment of the present invention may be from 1 to 11 v/v%, from 2 to 10 v/v%, or from 2 to 9 v/v%. The alcohol strength can be adjusted using sake, shochu, whiskey, brandy, raw material alcohol, spirits (grain spirits, neutral spirits), or the like.

The beverages in some embodiments of the present invention may be effervescent beverages. As used herein, the "effervescent beverage" is a beverage from which foam is generated, and includes, for example, a beverage in which a foam layer is formed on its liquid surface when the beverage is poured into a container. Examples of the effervescent beverage include carbonated beverages. The carbonated beverage is a beverage containing carbon dioxide gas, and examples of such a beverage containing carbon dioxide gas include a beverage obtained by separately injecting carbon dioxide gas into a beverage, a beverage obtained by using carbonated water as a raw material, and a beverage in which carbon dioxide gas is generated by fermenting a part of a raw material. A gas pressure of the effervescent beverage is not particularly limited, and can be from 0.5 to 5.0 kgf/cm², from 0.5 to 4.5 kgf/cm², from 0.5 to 4.0 kgf/cm², from 0.5 to 3.5 kgf/cm², from 0.5 to 3.0 kgf/cm², from 0.5 to 2.5 kgf/cm², from 0.5 to 2.0 kgf/cm², from 0.5 to 1.5 kgf/cm², from 1.0 to 5.0 kgf/cm², from 1.0 to 4.5 kgf/cm², from 1.0 to 4.0 kgf/cm², from 1.0 to 3.5 kgf/cm², from 1.0 to 3.0 kgf/cm², from 1.0 to 2.5 kgf/cm², from 1.0 to 2.0 kgf/cm², from 1.0 to 1.5 kgf/cm², from 1.5 to 5.0 kgf/cm², from 1.5 to 4.5 kgf/cm², from 1.5 to 4.0 kgf/cm², from 1.5 to 3.5 kgf/cm², from 1.5 to 3.0 kgf/cm², from 1.5 to 2.5 kgf/cm², from 1.5 to 2.0 kgf/cm², from 2.0 to 5.0 kgf/cm², from 2.0 to 4.5 kgf/cm², from 2.0 to 4.0 kgf/cm², from 2.0 to 3.5 kgf/cm², from 2.0 to 3.0 kgf/cm², from 2.0 to 2.5 kgf/cm², from 2.2 to 5.0 kgf/cm², from 2.2 to 4.5 kgf/cm², from 2.2 to 4.0 kgf/cm², from 2.2 to 3.5 kgf/cm², from 2.2 to 3.3 kgf/cm², from 2.2 to 3.2 kgf/cm², from 3.0 to 5.0 kgf/cm², from 2.3 to 4.5 kgf/cm², from 2.3 to 4.0 kgf/cm², from 2.3 to 3.5 kgf/cm2, from 2.3 to 3.2 kgf/cm², from 2.0 to 5.0 kgf/cm², from 3.0 to 4.5 kgf/cm², from 3.0 to 4.0 kgf/cm², from 3.0 to 3.5 kgf/cm², from 1.1 to 2.4 kgf/cm², from 1.2 to 2.3 kgf/cm², from 1.3 to 2.2 kgf/cm², or from 1.4 to 2.1 kgf/cm². The content of the gas in the effervescent beverage can be defined by the gas pressure. As used herein, the "gas pressure" refers to a gas pressure of carbon dioxide gas in the effervescent beverage in a container unless otherwise specified. The gas pressure can be measured by fixing a beverage having a liquid temperature of 20°C to a gas internal pressure meter, once opening a stopcock of the gas internal pressure meter to release the carbon dioxide gas in a head space to the atmosphere, then closing the stopcock again, shaking the gas internal pressure meter, and reading a value when a pointer reaches a certain position. As used herein, the gas pressure of the effervescent beverage is measured using this method, unless otherwise specified.

A taste (flavor) of the beverage in some embodiments of the present invention is not particularly limited, and can be adjusted to various flavors. For example, the beverage in some embodiments of the present invention may be a citrus fruit (such as mandarin orange, hassaku orange, Citrus iyo (Iyokan), navel orange, Valencia orange, Hyuganatsu (Citrus tamurana), Kiyomi orange, ponkan orange, buntan (Citrus grandis), grapefruit, lemon, shequasar (Citrus depressa), yuzu, and kumquat)-flavored beverage; pome fruit (such as apple, Japanese pear, Western pear, persimmon, loquat, pomegranate, and Karin (Chinese quince))-flavored beverage; stone fruit (such as peach, plum, nectarine, Japanese plum (ume), and apricot)-flavored beverage; berry (such as grape and fig)-flavored beverage; nut (such as chestnut, almond, pistachio, and cashew)-flavored beverage, tropical and subtropical fruit (such as pineapple, banana, papaya, lychee, kiwifruit, and mango)-flavored beverage; fruity vegetable (such as strawberry, melon, watermelon, and papaya)-flavored beverage; root vegetable (such as carrot and sweet potato)-flavored beverage; leaf and stem vegetable (such as celery)-flavored beverage; fruit vegetable (such as cucumber, pumpkin, tomato, and sweet corn)-flavored; aromatic vegetable and garnishing vegetable (such as ginger, perilla, hot pepper, cinnamon, and peppercorn)-flavored beverage; energy drink-flavored; coffee-flavored beverage; tea (such as black tea, green tea, oolong tea, roasted tea, jasmine tea, and various herbal teas)-flavored beverage; cocoa-flavored, cola-flavored, dessert (such as almond jelly)-flavored beverage; or lactic drink (such as yogurt and milk)-flavored beverage. The flavor of the beverage in some embodiments of the present invention may be the same as or different from the flavor of the immersion liquid of the frozen micro ground matter of the contained fruit and/or vegetable. The flavor of the beverage in some embodiments of the present invention can be adjusted by adding a component approved as a food additive such as fruit juice, a sour substance, a flavoring, a plant extract, a milk component, or another flavor, or a component which has been eaten for a long time and is generally recognized as safe even if it has not been approved.

A form of the beverage in some embodiments of the present invention is not limited and may be, for example, a form of a packaged non-alcoholic beverage or alcoholic beverage in which the beverage is enclosed and packaged in a container, such as a can, a bottle, a PET bottle, a pouch, a paper pack, and a plastic container.

### Sweetness Intensity

As used herein, the "sweetness intensity" refers to intensity of sweetness exhibited by a substance. For example, when the sweetness intensity exhibited by sucrose per unit concentration Brix is defined as a sweetness of 1 herein, rebaudioside A, rebaudioside D, and rebaudioside M all have a sweetness about 300 times. A numerical value obtained by multiplying these sweetness degrees by the concentration (w/v% (which can be regarded as w/w% in the case of a beverage)) of the sweetener in the beverage is the sweetness intensity of the beverage. When the sweetness intensity is calculated in the present invention, in the case of high-intensity sweeteners having a wide range of sweetness degrees, a central value thereof is used unless otherwise specified. In addition, the sweetness intensity of the beverage in some embodiments of the present invention does not need to be derived only from the steviol glycoside, and in the case where the beverage contains a sweetener described later, the sweetness intensity is a total value of the sweetness intensities derived from the steviol glycoside and the sweetener. For example, the sweetness of a luo han guo extract is from 110 to 150 (central value: 130), the sweetness of mogroside V is from 240 to 300 (central value: 270), and the sweetness of thaumatin is 2000. When the sweetness intensity exhibited by a sucrose solution per unit concentration Brix is defined as a sweetness of 1, the sweetness of glucose (glucose) is from 0.6 to 0.7 (central value: 0.65). The numerical value obtained by multiplying the sweetness by the concentration Brix value of glucose is the sweetness intensity of a glucose solution. Therefore, when the glucose concentration is a Brix of 1.5, the sweetness intensity of the glucose solution is 0.65 × 1.5 = 0.975.

A relative ratio of the sweetness of another sweetener to the sweetness of sucrose of 1 can be determined from a known sugar sweetness conversion table or the like. For example, when the sweetness degree of sucrose is 1, glucose has a sweetness degree of about from 0.6 to 0.7, fructose has a sweetness degree of about from 1.3 to 1.7, maltose has a sweetness degree of about 0.4, fructooligosaccharide has a sweetness degree of about 0.6, maltooligosaccharide has a sweetness degree of about 0.3, isomaltooligosaccharide has a sweetness degree of about from 0.4 to 0.5, galactooligosaccharide has a sweetness degree of about 0.7, lactose has a sweetness degree of about from 0.2 to 0.3, psicose has a sweetness degree of about 0.7, allose has a sweetness degree of about 0.8, tagatose has a sweetness degree of about 0.9, and fructose-glucose liquid sugar has a sweetness degree of about 0.75. For a sweetener whose relative ratio of the sweetness to the sweetness of sucrose of 1 is unknown or whose value varies depending on documents, the relative ratio of the sweetness thereof to the sweetness of sucrose of 1 may be determined by a sensory test. Examples of such a sensory test include a method in which samples are prepared by adding sugar to pure water so that the sweetness intensity ranges from 3.0 to 5.0 in increments of 0.5, and sugar-added samples having a sweetness intensity equivalent to that of an aqueous solution of a sweetener having a predetermined concentration are selected from the samples.

The sweetness intensity of the beverage varies depending on specific beverages, and is preferably approximately from 0.1 to 20. For example, the sweetness intensity may be from 0.1 to 18, from 0.1 to 15, from 0.5 to 14.5, from 1.0 to 14.0, from 1.5 to 13.5, from 2.0 to 13.0, from 2.5 to 12.5, from 3.0 to 12.0, from 3.5 to 11.5, from 4.0 to 11.0, from 4.5 to 10.5, from 5.5 to 10.0, from 6.0 to 9.5, from 6.5 to 9.0, from 7.0 to 8.5, from 7.5 to 8.0, from 4.5 to 12.5, from 4.5 to 10.0, from 4.5 to 7.5, from 5.5 to 12.5, from 5.5 to 10.0, from 5.5 to 7.5, from 6.5 to 12.5, from 6.5 to 10.0, or from 6.5 to 7.5.

### Optional, Additional Sweetener

### Low-Intensity Sweetener

The beverages in some embodiments of the present invention may further contain a low-intensity sweetener as long as the effects of the present invention are not impaired. As used herein, the low-intensity sweetener means a sweetener having a sweetness degree equivalent to or lower than that of sucrose. For example, the low-intensity sweetener exhibits a sweetness being 0.1 times or more and less than 5 times, less than 3 times, less than 2 times, less than 1.5 times, less than 1.0 times, less than 0.8 times, less than 0.7 times, less than 0.6 times, less than 0.5 times, or less than 0.4 times that of sucrose in the same amount as sucrose. Examples of the low-intensity sweetener that can be used in the present invention include a sweetener selected from glucose, sucrose, fructose, maltose, oligosaccharides, fructose-glucose liquid sugar, lactose, psicose, allose, tagatose, xylose, ribose, and combinations thereof. The non-alcoholic beverage or alcoholic beverage in a preferred embodiment of the present invention contains glucose, fructose, sucrose, a fructose-glucose liquid sugar, or a rare sugar (such as psicose (allulose), xylitol, and erythritol).

### High-Intensity Sweetener

The beverages in some embodiments of the present invention may further contain a high-intensity sweetener other than the steviol glycoside as long as the effects of the present invention are not impaired. As used herein, the term "high-intensity sweetener" refers to a compound that has a stronger sweetness than that of sucrose, and may be a naturally occurring compound, a synthetic compound, or a combination of naturally occurring and synthetic compounds. The high-intensity sweetener exhibits a sweetness being 5 times or more, 10 times or more, 50 times or more, 100 times or more, 500 times or more, 1000 times or more, 5000 times or more, 10000 times or more, 50000 times or more, or 100000 times or more that of sucrose in the same amount as sucrose. The steviol glycoside described above is also one of high-intensity sweeteners.

Specific examples of the high-intensity sweetener include peptide-based sweeteners such as aspartame, neotame, and advantame; sucrose derivatives such as sucralose; synthetic sweeteners (including sweeteners also naturally occurring, but mainly distributed in the form of synthetic products, such as neohesperidin dihydrochalcone) such as acesulfame potassium (acesulfame K), saccharin, saccharin sodium, sodium cyclamate, dulcin, disodium glycyrrhizinate, trisodium glycyrrhizinate, and neohesperidin dihydrochalcone; sweeteners extracted from plants, such as thaumatin, monellin, curculin, mabinlin, brazzein, pentadin, hernandulcin, 4β-hydroxyhernandulcin, miracullin, glycyrrhizin, rubusoside, and phyllodulcin; plant extracts containing a high-intensity sweetener component: Siraitia grosvenorii (luo han guo) extract, Glycyrrhiza glabra extract, Rubus suavissimus S. Lee (sugar tea) extract, Hydrangea macrophylla var. thunbergii (Japanese sweet tea) extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana extract, Capparis masaikai (Mabinlang) extract, and Lippia dulcis (Aztec sweet herb) extract; and sweet components in the extracts: mogrosides (such as mogroside V and mogroside IV) obtained by treating luo han guo and luo han guo extract, glycosides obtained from plant extracts such as a phyllodulcin glycoside, a sweet component contained in Glycyrrhiza glabra plant (a triterpene glycoside such as glycyrrhizin), a sweet component contained in Rubus suavissimus S. Lee plant (a diterpene glycoside such as rubusoside), a sweet component contained in Hydrangea macrophylla var. thunbergii plant (a dihydroisocoumarin such as phyllodulcin), a sweet component contained in Sclerochiton ilicifolius plant (an amino acid such as monatin), a sweet component contained in Thaumataococcus daniellii Benth plant (a protein such as thaumatin), a sweet component contained in Dioscoreophyllum volkensii plant (a protein such as monellin), a sweet component contained in Curculigo latifolia plant (a protein such as curculin), a sweet component contained in Richadella dulcifica plant (a protein such as miracullin), a sweet component contained in Pentadiplandra brazzeana plant (proteins such as brazzein and pentadin), a sweet component contained in Capparis masaikai plant (a protein such as mabinlin), and a sweet component contained in Lippia dulcis plant (sesquiterpenes such as hernandulcin and 4β-hydroxyhernandulcin).

The beverage in another embodiment of the present invention may contain, in addition to the steviol glycoside described above, another high-intensity sweetener such as a peptide-based sweetener, a sucrose derivative, or a synthetic sweetener. For example, the beverage in another embodiment of the present invention may contain one or more high-intensity sweeteners selected from acesulfame K and sucralose in addition to the steviol glycoside.

As for the content of sweeteners other than the steviol glycosides, in the case of high-intensity sweeteners (e.g., mogroside V and artificial sweeteners), a composition ratio of a total amount of the steviol glycosides to a total amount of the high-intensity sweeteners other than the steviol glycosides contained in the beverage may be from 99:1 to 50:50, from 95:5 to 55:45, from 90:10 to 60:40, from 85:15 to 65:35, from 80:20 to 70:30, from 80:20 to 75:25, from 99:1 to 85:5, from 98:2 to 86:14, from 97:3 to 87:13, from 96:4 to 88:12, or from 95:5 to 89:11 in mass ratio. When the beverage in an embodiment of the present invention contains low-intensity sweeteners (e.g., sucrose, fructose-glucose liquid sugar, and the like), a composition ratio of the total amount of the steviol glycoside to a total amount of the low-intensity sweeteners contained in the beverage may be from 1:1000 to 1:100, from 1:800 to 1:100, from 1:700 to 1:100, from 1:600 to 1:100, from 1:500 to 1:100, from 1:400 to 1:100, from 1:300 to 1:100, or from 1:200 to 1:100 in weight ratio.

Since the low-intensity sweetener such as sucrose or a fructose-glucose liquid sugar often used in a beverage or the like has a high energy, the energy (calorie) of the non-alcoholic beverage or alcoholic beverage can be greatly reduced by reducing the content of the low-intensity sweetener. In some embodiments of the present invention, a low energy (i.e., low calorie) is achieved by suppressing the concentration of the low-intensity sweetener to a low level, while sufficient sweetness is perceived upon intake due to the combination of the low-intensity sweetener and the steviol glycoside. Thus, the content of the low-intensity sweetener is preferably an amount that provides 100 kcal/100 ml or less of energy. The energy of the non-alcoholic beverage or alcoholic beverage according to an embodiment of the present invention may be from 5 to 100 kcal/100 ml, from 20 to 80 kcal/100 ml, or from 25 to 70 kcal/100 ml according to embodiments. The energy of the sweet substance or alcohol is known, or can be determined by measuring the content with HPLC or the like and multiplying it by an energy conversion factor, or by measuring physical combustion heat by using a calorimeter (for example, a bomb calorimeter or the like) and correcting the value with a digestibility coefficient, an amount of heat excreted, or the like.

The beverage according to some embodiments of the present invention may contain a sour substance. The sour substance is not particularly limited as long as it can impart sourness to the beverage, and examples thereof include ascorbic acid, phosphoric acid, citric acid, gluconic acid, tartaric acid, lactic acid, malic acid, phytic acid, acetic acid, succinic acid, glucono-delta-lactone, and salts thereof. Examples of the salt include sodium citrate and sodium ascorbate. Among these sour substances, ascorbic acid, phosphoric acid, citric acid, gluconic acid, tartaric acid, lactic acid, malic acid, phytic acid, acetic acid, succinic acid, or salts thereof are preferable, phosphoric acid, citric acid, lactic acid, tartaric acid, gluconic acid, acetic acid, or salts thereof are more preferable. One of these sour substances may be used alone, or two or more thereof may be used in combination.

The pH is not particularly limited, and may be, for example, from 2.0 to 6.5. For example, the pH of the beverage according to some embodiments of the present invention may be from 2.0 to 6.0, from 2.0 to 5.5, from 2.0 to 5.0, from 2.0 to 4.6, from 3.0 to 4.5, from 2.6 to 3.9, from 2.7 to 3.8, from 2.8 to 3.7, from 2.9 to 3.6, or from 3.0 to 4.0.

An antioxidant (such as sodium erythorbate), an emulsifier (such as sucrose fatty acid ester, sorbitan fatty acid ester, or polyglycerin fatty acid ester), a pigment, a flavoring, and the like can be appropriately added to the beverages according to some embodiments of the present invention, as long as the effects of the present invention are not impaired.

With respect to the production methods of some embodiments of the present invention, the "fruit and/or vegetable", "steviol glycoside", and "fruit juice" have the same meanings as the definitions described in the above section of "Beverage", and the numerical values thereof are the same as the numerical values described in the above section of "Beverage".

As used herein, the term "about" means that the subject is present in a range of ±25%, ±10%, ±5%, ±3%, ±2%, or ±1% of the numerical value following the term "about". For example, "about 10" means a range of 7.5 to 12.5.

### Examples

Hereinafter, the present invention will be specifically described by illustrating examples, but the present invention is not limited to the following examples.

### [Reference Example] Evaluation of influence on flavor of alcoholic beverage by RebD Preparation of Sample

Sample liquids were prepared by mixing grain spirits, sweeteners, and water so as to have the blending amounts listed in Table 1. The raw materials used are as follows: Grain spirits (alcohol strength: 59 v/v%), sugar (sucrose, "granulated sugar GS" available from Mitsui Sugar Co., Ltd.), rebaudioside D (RebD): purity of 90% or more, water (reverse osmosis water (RO water)). Each sample was prepared so as to have a sweetness intensity of 8. At that time, a sample was prepared by setting the sweetness degree of sugar (sucrose) to 1 and setting the sweetness degree of rebaudioside D to about 300 times that of sugar. Two trained professional panelists evaluated the prepared samples in free comments. The results are summarized in Table 1.

**[Table 1]**

| Table 1: Comparison of taste qualities of beverages containing sugar and RebD (sweetness intensity 8) | | | |
|---|---|---|---|
| | Unit | Reference Example 1 | Reference Example 2 |
| Sugar | g/1000 ml | 80 | - |
| RebD | mg/1000 ml | - | 267 |
| Grain spirits | ml/1000 ml | 84.3 | 84.3 |
| Sweetness intensity | - | 8 | 8 |
| Alcohol strength | v/v% | 5 | 5 |
| Comment | | Sweetness is felt from the top and lasts without miscellaneous taste. | The top sweetness is not so strong, and bitterness is felt in the latter half. |

| | | | |
|---|---|---|---|
| * In the table, a raw material whose blending amount is indicated by "-" means that the raw material is not blended. | | | |

### [Example A] Study on effect of blending of alcohol with immersed frozen and micro ground matter of lemon

Based on the results of the study in the reference example, whether or not the taste quality (the top sweetness is not so strong, and bitterness is felt in the latter half) when rebaudioside D was used in the beverage was improved when alcohol with immersed frozen and micro ground matter of lemon was added was evaluated. Sample preparation methods, evaluation procedures, and results obtained are summarized below.

### <Sample preparation procedure>

### I. Preparation of alcohol with immersed frozen and micro ground matter of lemon

With fresh lemon fruit, an alcohol with immersed frozen and micro ground matter of fruit was prepared according to the contents described in WO 2006/009252.

Specifically, the fresh lemon fruit was cut to an appropriate size and frozen using liquid nitrogen at -196°C. The obtained frozen matter was charged into a freeze pulverizer and micro ground in the frozen state to obtain a powdery frozen micro ground matter having a grain size of about 200 µm or less. The grain size was measured by diluting the frozen micro ground matter with water having the amount about 20 times and measuring the particle size distribution with a laser diffraction type particle size distribution measuring apparatus (SALD-3100; Shimadzu Corporation). Next, the frozen micro ground matter was immersed in a raw material alcohol having an alcohol strength of 59 v/v%. The obtained immersion liquid was treated using a centrifuge to sufficiently separate the liquid and the solid content, and then the solid content was removed. According to such a procedure, alcohol with immersed frozen and micro ground matter of lemon having an alcohol strength of about 54 v/v% was obtained.

### II. Preparation of sample beverage

A sample liquid was prepared by mixing grain spirits, a sweetener, and water in addition to the alcohol with immersed frozen and micro ground matter of lemon prepared in I above or lemon juice so as to have the blending amount listed in Table 2. The raw materials used are as follows: Grain spirits (alcohol strength: 59 v/v%), rebaudioside D (RebD): purity of 90% or more, lemon juice: "freeze-concentrated lemon clear fruit juice 400 GPL" available from San Miguel Corporation, water (RO water).

### <Evaluation of taste quality>

### Evaluation Method

For the samples prepared as described above, four trained professional panelists independently scored the "latter bitterness and sweetness" on a scale of five grades, from Score 1 to Score 5, according to the following evaluation criteria, and the average value thereof was calculated. Here, the "latter bitterness" means the bitterness in the latter half after the top as listed in FIG. 1, and the "sweetness" means the overall sweetness including the top. The higher the score, the better the overall sweetness including the top, meaning that the bitterness in the latter half is suppressed. That is, it means that the higher the score, the better the taste quality.

### Evaluation Criteria

1 point: The latter bitterness is noticeable.
2 points: The latter bitterness is slightly noticeable.
3 points: The latter bitterness is not noticeable, and the sweetness is weak.
4 points: The latter bitterness is not noticeable, and there is also sweetness.
5 points: There is natural sweetness in the latter half.

The results of the sensory evaluation are listed in Table 2. The sweetness intensity was calculated from the amount of added sweetener. The alcohol strength was calculated from the amount of the grain spirits added and the amount of alcohol with immersed frozen and micro ground matter of lemon. A pure alcohol ratio of the alcohol with immersed frozen and micro ground matter of lemon was calculated by the following method. First, since the alcohol strength of the alcohol with immersed frozen and micro ground matter of lemon is 54 v/v%, the amount of alcohol derived from the alcohol with immersed frozen and micro ground matter of lemon is calculated from the blending amount. For example, in Example A2, since the blending amount of the alcohol with immersed frozen and micro ground matter of lemon is 14.2 ml/1000 ml, the alcohol amount is 7.7 ml/1000 ml (14.2 (ml/1000 ml) × 0.54 = 7.7 ml/1000 ml). The alcohol strength is 5 v/v% (carried out with ≈ 50 ml/1000 ml), and the pure alcohol ratio (15%) can be calculated by dividing the amount of alcohol derived from the alcohol with immersed frozen and micro ground matter of lemon by this value (7.7/50x100).

### [Table 2]

**Table 2**

| | Unit | Reference Example 3 | Comparative Example A | Example A1 | Example A2 | Example A3 | Example A4 | Example A5 | Example A6 | Example A7 | Example A8 | Example A9 |
|---|---|---|---|---|---|---|---|---|---|---|---|---|
| Presence or absence of alcohol with immersed frozen and micro ground matter of lemon | - | None | None | Present | Present | Present | Present | Present | Present | Present | Present | Present |
| Sugar | g/1000 ml | - | - | - | - | - | - | - | - | - | - | - |
| Rebaudioside D | mg/1000 ml | 300 | 300 | 3 | 3 | 17 | 17 | 500 | 500 | 667 | 667 | 1,000 |
| Alcohol with immersed frozen and micro ground matter of lemon | ml/1000 ml | - | - | 0.01 | 14.2 | 0.1 | 9.5 | 0.1 | 9.5 | 0.01 | 14.2 | 0.01 |
| Grain spirits | ml/1000 ml | 86.9 | 86.9 | 86.9 | 73.9 | 86.8 | 78.2 | 86.8 | 78.2 | 86.9 | 73.9 | 86.9 |
| Sweetness intensity | - | 9 | 9 | 0.1 | 0.1 | 0.5 | 0.5 | 15 | 15 | 20 | 20 | 30 |
| Alcohol with immersed frozen and micro ground matter of lemon (Pure alcohol ratio) | % | - | - | 0.01 | 15 | 0.1 | 10 | 0.1 | 10 | 0.01 | 15 | 0.01 |
| Alcohol | v/v% | 5 | 5 | 5 | 5 | 5 | 5 | 5 | 5 | 5 | 5 | 5 |
| Lemon juice | % (fruit juice proportion) | - | 1 | - | - | - | - | - | - | - | - | - |
| Sensory evaluation result | - | 1 | 1.25 | 2.75 | 3.25 | 3.75 | 4 | 4.5 | 5 | 4 | 5 | 2 |

| | | | | | | | | | | | | |
|---|---|---|---|---|---|---|---|---|---|---|---|---|
| * In the table, a raw material whose blending amount is indicated by "-" means that the raw material is not blended. | | | | | | | | | | | | |

### (Example B) Study on effect of combined use with sugar or fruit juice

As in Example A, a sample liquid was provided by mixing grain spirits, a sweetener, and water so as to have the blending amount listed in Table 3. The raw materials used are as follows: Grain spirits (alcohol strength: 59 v/v%), sugar (sucrose, "granulated sugar GS" available from Mitsui Sugar Co., Ltd.), lemon juice: "freeze-concentrated lemon clear fruit juice 400 GPL" available from San Miguel Corporation, rebaudioside D (RebD): purity of 90% or more, water (RO water), alcohol with immersed frozen and micro ground matter of lemon (prepared in Example A).

The samples thus prepared were evaluated for the "latter bitterness and sweetness" by four trained professional panelists according to the same criteria as in Example A. The alcohol strength was calculated from the grain spirits added and the amount of alcohol with immersed frozen and micro ground matter of lemon. The sweetness intensity was calculated from the amount of added sweetener. The results are listed in Table 3.

### [Table 3]

**Table 3**

| | Unit | Example B1 | Example B2 |
|---|---|---|---|
| Sugar | g/1000 ml | - | 40 |
| Rebaudioside D | mg/1000 ml | 300 | 167 |
| Alcohol with immersed frozen and micro ground matter of lemon | ml/1000 ml | 2.8 | 2.8 |
| Grain spirits | ml/1000 ml | 84.3 | 84.3 |
| Sweetness intensity | - | 9 | 9 |
| Alcohol with immersed frozen and micro ground matter of lemon (Pure alcohol ratio) | % | 3 | 3 |
| Alcohol | v/v% | 5 | 5 |
| Lemon juice | % (fruit juice proportion) | 1 | 1 |
| Sensory evaluation | - | 4.75 | 5 |

| | | | |
|---|---|---|---|
| * In the table, a raw material whose blending amount is indicated by "-" means that the raw material is not blended. | | | |

### (Example C) Study on effect of additional step

In order to evaluate the effect of an additional step (centrifugation step), a difference in the effect in the presence or absence of the centrifugation step at the time of preparing the alcohol with immersed frozen and micro ground matter of lemon was compared. An alcohol with immersed frozen and micro ground matter of lemon was prepared in the same manner as in Example A except that the centrifugation treatment was not performed at the end of the alcohol with immersed frozen and micro ground matter of lemon preparation procedure in Example A. As in Example A, a sample liquid was provided by mixing grain spirits, a sweetener, and water so as to have the blending amount listed in Table 4. The raw materials used are as follows: Grain spirits (alcohol strength: 59 v/v%), sugar (sucrose, "granulated sugar GS" available from Mitsui Sugar Co., Ltd.), lemon juice: "freeze-concentrated lemon clear fruit juice 400 GPL" available from San Miguel Corporation, rebaudioside D (RebD): purity of 90% or more, water (RO water), alcohol with immersed frozen and micro ground matter of lemon (prepared in Example A).

The samples thus prepared were evaluated for the "bitterness and sweetness in aftertaste" by four trained professional panelists according to the same criteria as in Example A. The alcohol strength was calculated from the grain spirits added and the amount of alcohol with immersed frozen and micro ground matter of lemon. The sweetness intensity was calculated from the amount of added sweetener. The results are listed in Table 4.

**[Table 4]**

| Table 4: Study on effect of presence or absence of centrifugation step | | | |
|---|---|---|---|
| | Unit | Example C1 | Example B2 |
| Sugar | g/1000 ml | 40 | 40 |
| Rebaudioside D | mg/1000 ml | 167 | 167 |
| Alcohol with immersed frozen and micro ground matter of lemon | ml/1000 ml | 2.8 | 2.8 |
| Grain spirits | ml/1000 ml | 84.3 | 84.3 |
| Sweetness intensity | - | 9 | 9 |
| Alcohol with immersed frozen and micro ground matter of lemon (Pure alcohol ratio) | % | 3 | 3 |
| Alcohol | v/v% | 5 | 5 |
| Lemon juice | % | 1 | 1 |
| Centrifugation of alcohol with immersed frozen and micro ground matter of lemon | - | None | Present |
| Sensory evaluation result | | 4.25 | 5 |

### (Example D) Study on effect of different fruits and steviol glycosides

As in Example A, a sample liquid was provided by mixing grain spirits, a sweetener, and water so as to have the blending amount listed in Table 5. The raw materials used are as follows: Grain spirits (alcohol strength: 59 v/v%), rebaudioside A: purity of 95.0% or more, rebaudioside M: purity of 96.6%, rebaudioside D (RebD): purity of 90% or more, water (RO water), alcohol with immersed frozen and micro ground matter of lemon (prepared in Example A). An alcohol with immersed frozen and micro ground matter of peach (alcohol strength: about 30 v/v%) used was prepared under the conditions described in Example A except that the fruit was changed from lemon to peach and immersed using a raw material alcohol having an alcohol strength of 30 v/v%.

The samples thus prepared were evaluated for the "latter bitterness and sweetness" by four trained professional panelists according to the same criteria as in Example A. The alcohol strength was calculated from the amount of alcohol with immersed frozen and micro ground matter of the added grain spirits, lemon, and peach. The sweetness intensity was calculated from the amount of added sweetener. The results are listed in Table 5.

### [Table 5]

**Table 5**

| | Unit | Example D1 | Example D2 | Example D3 |
|---|---|---|---|---|
| Sugar | g/1000 ml | - | - | - |
| Rebaudioside A | mg/1000 ml | 300 | - | - |
| Rebaudioside M | mg/1000 ml | - | 300 | - |
| Rebaudioside D | mg/1000 ml | - | - | 300 |
| Alcohol with immersed frozen and micro ground matter of lemon | ml/1000 ml | 2.8 | 2.8 | - |
| Alcohol with immersed frozen and micro ground matter of peach | ml/1000 ml | - | - | 5.3 |
| Grain spirits | ml/1000 ml | 84.3 | 84.3 | 84.3 |
| Sweetness intensity | - | 9 | 9 | 9 |
| Alcohol with immersed frozen and micro ground matter of lemon (Pure alcohol ratio) | % | 3 | 3 | - |
| Alcohol with immersed frozen and micro ground matter of peach (Pure alcohol ratio) | % | - | - | 3 |
| Alcohol | v/v% | 5 | 5 | 5 |
| Lemon juice | % (fruit juice proportion) | - | - | - |
| Sensory evaluation | - | 4.25 | 5 | 3.75 |

| | | | | |
|---|---|---|---|---|
| * In the table, a raw material whose blending amount is indicated by "-" means that the raw material is not blended. | | | | |

### (Example E) Example using various steviol glycosides

As in Example A, a sample liquid is provided by mixing grain spirits, a sweetener, and water so as to have the blending amount listed in Table 6. The raw materials used are as follows: Grain spirits (alcohol strength: 59 v/v%), rebaudioside A: purity of 95.0% or more, rebaudioside M: purity of 96.6%, rebaudioside D (RebD): purity of 90% or more, water (RO water), alcohol with immersed frozen and micro ground matter of lemon (prepared in the same manner as in Example A). The alcohol strength is calculated from the grain spirits added and the amount of alcohol with immersed frozen and micro ground matter of lemon. The sweetness intensity is calculated from the amount of added sweetener.

### [Table 6]

**Table 6**

| | | Example E1 | Example E2 | Example E3 | Example E4 | Example E5 | Example E6 | Example E7 | Example E8 |
|---|---|---|---|---|---|---|---|---|---|
| Rebaudioside A | mg/1000 ml | 17 | 17 | 500 | 500 | - | - | - | - |
| Rebaudioside M | mg/1000 ml | - | - | - | - | 17 | 17 | 500 | 500 |
| Alcohol with immersed frozen and micro ground matter of lemon | ml/1000 ml | 0.1 | 9.5 | 0.1 | 9.5 | 0.1 | 9.5 | 0.1 | 9.5 |
| Grain spirits | ml/1000 ml | 86.8 | 78.2 | 86.8 | 78.2 | 86.8 | 78.2 | 86.8 | 78.2 |
| Sweetness intensity | | 0.5 | 0.5 | 15 | 15 | 0.5 | 0.5 | 15 | 15 |
| Alcohol with immersed frozen and micro ground matter of lemon (Pure alcohol ratio) | % | 0.1 | 10 | 0.1 | 10 | 0.1 | 10 | 0.1 | 10 |
| Alcohol | v/v% | 5 | 5 | 5 | 5 | 5 | 5 | 5 | 5 |

| | | | | | | | | | |
|---|---|---|---|---|---|---|---|---|---|
| * In the table, a raw material whose blending amount is indicated by "-" means that the raw material is not blended. | | | | | | | | | |

### (Example F) Example using alcohol with immersed frozen and micro ground matter of various fruits

As in Example A, a sample liquid is provided by mixing grain spirits, a sweetener, and water so as to have the blending amount listed in Table 7. The raw materials used are as follows: Grain spirits (alcohol strength: 59 v/v%), rebaudioside D (RebD): purity of 90% or more, water (RO water), alcohol with immersed frozen and micro ground matter (in a procedure similar to the method described in Example A, grape or peach is used instead of lemon, the alcohol strength is about 30 v/v%). The alcohol strength is calculated from the grain spirits added and the amount of grape or alcohol with immersed frozen and micro ground matter of peach. The sweetness intensity is calculated from the amount of added sweetener.

### [Table 7]

**Table 7**

| | | Example F1 | Example F2 | Example F3 | Example F4 | Example F5 | Example F6 | Example F7 | Example F8 |
|---|---|---|---|---|---|---|---|---|---|
| Rebaudioside D | mg/1000 ml | 17 | 17 | 500 | 500 | 17 | 17 | 500 | 500 |
| Alcohol with immersed frozen and micro ground matter of grape | ml/1000 ml | 0.2 | 17 | 0.2 | 17 | - | - | - | - |
| Alcohol with immersed frozen and micro ground matter of peach | ml/1000 ml | - | - | - | - | 0.2 | 17 | 0.2 | 17 |
| Grain spirits | ml/1000 ml | 86.8 | 78.2 | 86.8 | 78.2 | 86.8 | 78.2 | 86.8 | 78.2 |
| Sweetness intensity | | 0.5 | 0.5 | 15 | 15 | 0.5 | 0.5 | 15 | 15 |
| Alcohol with immersed frozen and micro ground matter of grape (Pure alcohol ratio) | % | 0.1 | 10 | 0.1 | 10 | - | - | - | - |
| Alcohol with immersed frozen and micro ground matter of peach (Pure alcohol ratio) | % | - | - | - | - | 0.1 | 10 | 0.1 | 10 |
| Alcohol | v/v% | 5 | 5 | 5 | 5 | 5 | 5 | 5 | 5 |

| | | | | | | | | | |
|---|---|---|---|---|---|---|---|---|---|
| * In the table, a raw material whose blending amount is indicated by "-" means that the raw material is not blended. | | | | | | | | | |

## Claims

1. A method for producing a beverage, the method comprising:
obtaining a frozen matter by freezing one or more selected from the group consisting of fruits and vegetables;
obtaining a micro ground matter by micro grinding the frozen matter;
obtaining an alcohol immersion liquid by immersing the micro ground matter in an alcohol solution with a concentration at which one or more raw material components can be extracted; and
blending the alcohol immersion liquid and a steviol glycoside in a beverage.

2. The method according to claim 1, wherein the steviol glycoside comprises one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside, and
a blending amount of the one or more steviol glycosides is 3 mg/1000 ml or more with respect to the beverage.

3. The method according to claim 2, wherein the blending amount of the one or more steviol glycosides is from 10 to 800 mg/1000 ml with respect to the beverage.

4. The method according to claim 2 or 3, wherein the one or more steviol glycosides comprise one or more selected from the group consisting of rebaudioside A, rebaudioside D, and rebaudioside M.

5. The method according to any one of claims 1 to 4, wherein a blending amount of the alcohol immersion liquid is from 0.001% to 20% in terms of a pure alcohol ratio with respect to the beverage.

6. The method according to any one of claims 1 to 5, further comprising blending straight fruit juice or concentrated fruit juice into the beverage.

7. The method according to any one of claims 1 to 6, further comprising blending a low-intensity sweetener or a high-intensity sweetener other than the steviol glycoside.

8. The method according to any one of claims 1 to 7, further comprising, before blending the alcohol immersion liquid in the beverage, performing centrifugation.

9. The method according to any one of claims 1 to 8, wherein by the micro grinding, an average grain size of the frozen matter is 200 µm or less.

10. The method according to any one of claims 1 to 9, wherein an immersion liquid is obtained by immersing in an alcohol solution having a concentration of from 15 to 100 v/v%.

11. The method according to any one of claims 1 to 10, wherein a frozen matter is obtained by freezing a fruit of citrus fruits, pome fruits, or stone fruits.

12. A beverage comprising an alcohol immersion liquid of one or more frozen micro ground matters selected from the group consisting of fruits and vegetables, and a steviol glycoside.

13. The beverage according to claim 12, wherein an alcohol strength is from 0.1 to 40 v/v%.

14. The beverage according to claim 12 or 13, wherein a content of one or more steviol glycosides selected from the group consisting of stevioside, rebaudioside A, rebaudioside B, rebaudioside C, rebaudioside D, rebaudioside F, rebaudioside M, dulcoside A, rubusoside, and steviolbioside is from 10 to 800 mg/1000 ml with respect to the beverage.

15. The beverage according to any one of claims 12 to 14, wherein sweetness intensity is from 0.1 to 20.

16. The beverage according to any one of claims 12 to 15, wherein a pH is from 2.0 to 4.6.

17. The beverage according to any one of claims 12 to 16, which is a beverage of citrus fruit-flavored, pome fruit-flavored, stone fruit-flavored, berry-flavored, nut-flavored, tropical and subtropical fruit-flavored, fruity vegetable-flavored, root vegetable-flavored, leaf and stem vegetable-flavored, fruit vegetable-flavored, aromatic vegetable and garnishing vegetable-flavored, energy drink-flavored, coffee-flavored, tea-flavored, cocoa-flavored, cola-flavored, dessert-flavored, or dairy drink-flavored beverage.

18. The beverage according to any one of claims 12 to 17, wherein the beverage is a packaged beverage.
